# EUROPÄISCHE PATENTSCHRIFT

(11) **EP 2 122 788 B1**
(45) Veröffentlichungstag und Bekanntmachung des Hinweises auf die Patenterteilung: **02.12.2015**
(21) Anmeldenummer: 08707891.1
(22) Anmeldetag: 14.01.2008
(51) Int. Cl.: H01R 13/631, H01R 25/16, H02B 1/052, H01R 13/53, H02B 13/00

(54) **ISOLIERKÖRPER FÜR EINE SAMMELSCHIENENKUPPLUNG UND SAMMELSCHIENENKUPPLUNG**
INSULATING BODY FOR A BUSBAR COUPLING AND BUSBAR COUPLING
CORPS ISOLANT POUR COUPLAGE DE BARRES COLLECTRICES ET COUPLAGE DE BARRES COLLECTRICES CORRESPONDANT

(30) Priorität: 16.01.2007 DE 102007003636
(43) Veröffentlichungstag der Anmeldung: 25.11.2009
(73) Patentinhaber: Siemens Aktiengesellschaft, 80333 München (DE)
(72) Erfinder: HORZ, Christof, 56414 Salz (DE); DIRKS, Rolf, 47877 Willich (DE); HOHMANN, Stefan, 36100 Petersberg (DE)
(86) Internationale Anmeldenummer: PCT/EP2008/050346
(87) Internationale Veröffentlichungsnummer: WO 2008/087117

(56) Entgegenhaltungen:
- EP-A- 0 789 438
- EP-A- 0 891 013
- DE-B3-102006 015 310
- DE-C1- 10 119 333
- US-A- 4 296 273

## Beschreibung

Die Erfindung betrifft einen Isolierkörper für eine Sammelschienenkupplung zur Aufnahme von mittels eines Verbindungselementes verbundenen Kontaktstücken, welche Schalterfeldern der Schaltanlage zugeordnet sind, welcher Isolierkörper eine hohlzylindrische Innenkontur mit einem Zentriermittel für das Verbindungselement aufweist.

Ein solcher Isolierkörper ist aus der DE 101 19 333 C5 bekannt. Der dort offenbarte Isolierkörper ist zur Aufnahme von Kontaktstücken ausgebildet, welche Schalterfeldern einer Schaltanlage zugeordnet sind. Zum Verbinden der Kontaktstücke dient ein innerhalb der Kontaktstücke verlaufendes Verbindungselement. Der Isolierkörper liegt mit seiner hohlzylindrischen Innenkontur an den Kontaktstücken außen an und weist mittig ein Zentriermittel in Form eines umlaufenden Ringes auf, welches Zentriermittel als Montagehilfe für die Anordnung des Verbindungselementes dient.

EP-A1-0891013 offenbart einen Isolierkörper für eine Sammelschienenkupplung nach dem Oberbegriff des Anspruchs 1.

J Aufgabe der vorliegenden Erfindung ist es, einen Isolierkörper der eingangs erwähnten Art auszubilden, welcher eine einfache Montage in einer Sammelschienenkupplung ermöglicht. Erfindungsgemäß gelöst wird dies bei einem Isolierkörper der eingangs erwähnten Art dadurch, dass der Isolierkörper darart ausgebildet ist dass der Isolierkörper das Verbindungselement und die Kontaktstücke mit Abstand umgibt und dass das Zentriermittel durch mehrere an der Innenkontur verteilt angeordnete Noppen gebildet ist.

Ein derartiger Isolierkörper ist vorteilhaft zu montieren, weil durch seinen im Vergleich zum Außendurchmesser der Kontaktstücke größeren Innendurchmesser einerseits ein aufwendiges und passgenaues Aufschieben auf die Kontaktstücke nicht notwenig ist und andererseits durch das in Form von mehreren Noppen gebildete Zentriermittel eine flexible Zentrierung des Verbindungselementes ermöglicht ist, so dass bei einer leichten Fehlausrichtung von zu verbindenden Schalterfeldern einer Schaltanlage die notwendige Flexibilität zum Ausgleich der Fehlausrichtung durch die Noppen als Zentriermittel gegeben ist.

In weiterer Ausgestaltung der Erfindung weisen die Innenkontur und die Noppen eine leitende Beschichtung auf. Eine derartige leitende Beschichtung ist besonders vorteilhaft, weil dadurch eine Feldsteuerung in einfacher Weise ermöglicht ist. Durch die leitende Beschichtung der Noppen ist eine Kontaktgabe zwischen dem Verbindungselement und dem Isolierkörper in einfacher Weise ausgebildet, wobei durch die leitende Beschichtung des Isolierkörper der gesamte Isolierkörper im eingebauten Zustand auf dem Potential von Kontaktstücken und Verbindungselement liegt, so dass in dem zwischen dem Isolierkörper und dem Verbindungselement gebildeten Hohlraum keine Teilentladungsvorgänge stattfinden können.

In einer weiteren bevorzugten Ausführungsform ist die leitende Beschichtung aus einem abriebfesten Leitlack gebildet. Ein derartiger abriebfester Leitlack ist besonders vorteilhaft, weil dadurch eine Montage durch einfaches Einschieben des Verbindungselementes in den Isolierkörper ermöglicht ist, ohne dass die Feldsteuereigenschaften des Isolierkörpers verschlechtert werden.

In weiterer Ausgestaltung der Erfindung ist an dem Isolierkörper eine äußere Leitschicht vorgesehen. Eine derartige äußere Leitschicht ist besonders vorteilhaft, um eine Feldabsteuerung des Potentials im Isolierkörper zu erreichen.

Die Erfindung betrifft des Weiteren eine Sammelschienenkupplung für eine Schaltanlage zum Verbinden zweier Schalterfelder mit Isolierbuchsen für jedes Schalterfeld, welche jeweils ein Kontaktstück umgeben und mit einem Verbindungselement zum Verbinden der Kontaktstücke sowie einem Isolierelement, das eine hohlzylindrische Innenkontur mit einem Zentriermittel für das Verbindungselement aufweist.

Eine derartige Sammelschienenkupplung ist ebenfalls aus der DE 101 19 333 C5 bekannt. Die dort offenbarte Sammelschienenkupplung für eine Schaltanlage zum Verbinden zweier Schalterfelder der Schaltanlage umfasst Isolierbuchsen für jedes Schalterfeld. Die Isolierbuchsen umgeben jeweils ein Kontaktstück. Ein Verbindungselement zum Verbinden der Kontaktstücke ist dabei von einem Isolierelement mit einer hohlzylindrischen Innenkontur und einem Zentriermittel für das Verbindungselement umgeben. Das Isolierelement der DE 101 19 333 C5 umschließt dabei die Kontaktstücke der Sammelschienenkupplung formschlüssig.

Aufgabe der vorliegenden Erfindung ist es, eine Sammelschienenkupplung der oben erwähnten Art auszubilden, welche bei einfacher Montage eine flexible Ausgestaltung aufweist.

Erfindungsgemäß gelöst wird dies bei einer derartigen Sammelschienenkupplung dadurch, dass das Isolierelement als Isolierkörper gemäß der oben dargelegten Erfindung ausgebildet ist.

Durch die Ausbildung des Isolierelementes in Form eines erfindungsgemäßen Isolierkörpers ist die erfindungsgemäße Sammelschienenkupplung einerseits vorteilhaft einfach zu montieren, weil durch die erfindungsgemäßen Eigenschaften des Isolierkörpers ein aufwendiges passgenaues Aufschieben des Isolierkörpers auf die Kontaktstücke entfällt und andererseits eine einfache Montage unter Ausgleich von geringen Fehlausrichtungen zwischen zu verbindenden Schalterfeldern ermöglicht ist.

Weitere Ausgestaltungen und bevorzugte Ausführungsformen der erfindungsgemäßen Sammelschienenkupplung ergeben sich aus den Unteransprüchen sowie dem Ausführungsbeispiel.

Die Erfindung wird im Folgenden anhand der Zeichnung und ei-nes Ausführungsbeispiels mit Bezug auf die beiliegenden Figuren näher erläutert. Es zeigen:
- Figur 1: eine Querschnittsansicht eines Ausführungsbeispiels einer erfindungsgemäßen Sammelschienenkupplung mit einem Ausführungsbeispiels eines erfindungsgemäßen Isolierkörpers; und
- Figur 2: eine Querschnittsansicht durch ein Ausführungsbeispiel eines erfindungsgemäßen Isolierkörpers.

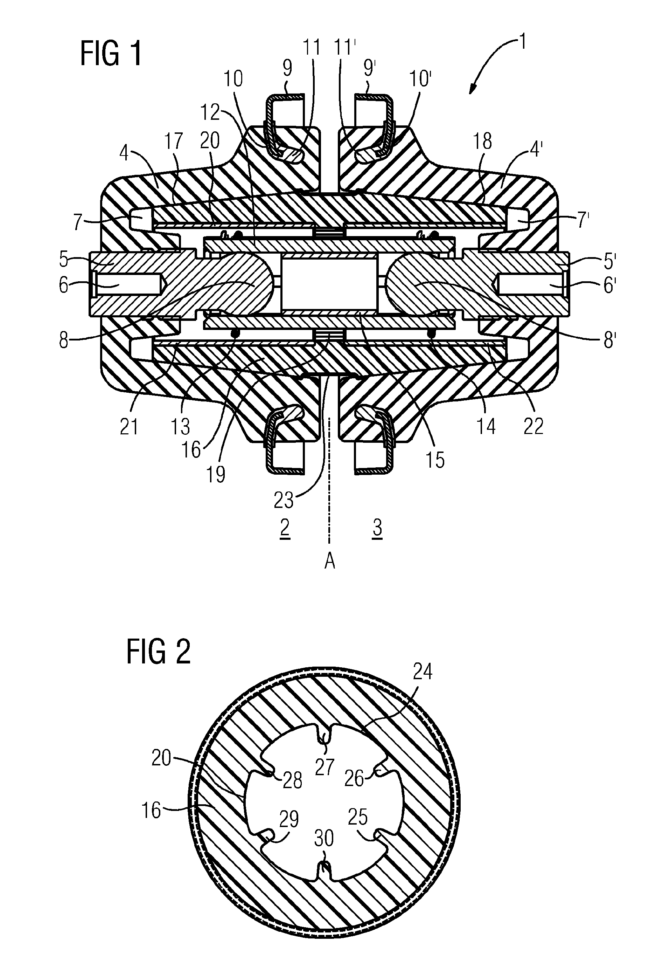

Figur 1 zeigt ein Ausführungsbeispiel einer Sammelschienenkupplung 1 zum Verbinden zweier Schalterfelder 2 und 3 einer Schaltanlage, beispielsweise einer gasisolierten Mittelspannungs-Schaltanlage. Die Sammelschienenkupplung 1 weist einen zu einer Achse A im Wesentlichen symmetrischen Aufbau auf, wobei im Folgenden der Aufbau der Sammelschienenkupplung 1 anhand des Schalterfeldes 2 erläutert werden und entsprechende gleich ausgeführte Teile für das Schalterfeld 3 mit gleichen Bezugszeichen mit Apostroph versehen sind.

Eine Isolierbuchse 4 weist ein in ihr eingegossenes Kontaktstück 5 auf, welches Kontaktstück 5 mittels einer Verschraubung 6 mit einem figürlich nicht dargestellten Leiter der Schaltanlage verbindbar ist. Das Kontaktstück 5 weist an seinem in einen innenkonusartigen Hohlraum 7 hineinragenden Ende eine kugelartige Ausbildung oder mit anderen Worten ein Kugelende 8 auf. In die Isolierbuchse 4 eingegossen ist ein umfänglich umlaufender Befestigungsflansch 9, welcher an seinem eingegossenen Ende 10 als Steuerelektrode 11 ausgebildet ist. Die Kugelenden 8, 8' der Kontaktstücke 5, 5' sind über ein Verbindungselement 12 leitend miteinander verbunden, wobei das Verbindungselement 12 im Ausführungsbeispiel mehrere umfänglich hintereinander angeordnete Segmente aufweist, welche mittels Ringfedern 13, 14 in einer zylindrischen Form gehalten sind. Im Inneren des Verbindungselementes 12 ist eine innere Hülse 15 zur Abstützung und Formgebung des Verbindungselementes 12 vorgesehen. Ein Isolierkörper 16 aus einem elastischen Material, beispielsweise Silikonkautschuk, erstreckt sich in die Isolierbuchsen 4 und 4' in den Bereich der innenkonusartigen Hohlräume 7 und 7' hinein und weist einen Innendurchmesser auf, welcher größer ist als der Außendurchmesser des Verbindungselementes 12 und der Kontaktstücke 5, 5'. Eine Außenkontur des Isolierkörpers 16 weist dabei zwei außenkonusartige Abschnitte 17 und 18 auf, welche passgenau mit den innenkonusartigen Hohlräumen 7, 7' der Isolierbuchsen 4, 4' ausgebildet sind. Mittig im Bereich der Achse A ist an dem Isolierkörper 16 ein Zentriermittel 19 vorgesehen, welches zur Halterung und Zentrierung des Verbindungselementes 12 dient. Der Isolierkörper 16 weist eine leitende Beschichtung 20 auf, welche sich über die hohlzylindrische Innenkontur des Isolierkörpers 16 und über das Zentriermittel 19 hinweg erstrecken. Die leitende Beschichtung 20 bildet dadurch im Bereich des Zentriermittels eine Kontaktgabe mit dem Verbindungselement 12 aus. Zur Stabilisierung des Isolierkörpers 16 sind Stützhülsen 21 und 22 vorgesehen, welche in ihrem Außendurchmesser dem Innendurchmesser der hohlzylindrischen Innenkontur des Isolierkörpers 16 entsprechen und zur Aufnahme von Druckpresskräften bei der Montage der Sammelschienenkupplung 1 ausgebildet sind. Der Isolierkörper 16 weist weiterhin eine äußere Leitschicht 23 auf, welche zur Feldabsteuerung zusammen mit der leitenden Beschichtung 20 und den Steuerelektroden 11, 11' vorgesehen ist. Die Steuerlektroden 11, 11' sind dabei so ausgerichtet, dass die äußere Leitschicht 23 des Isolierkörpers im Bereich ihrer Enden von der elektrischen Feldstärke entlastet ist, so dass in diesem Bereich keine Feldüberhöhungen ausgebildet sind.

Figur 2 zeigt eine Querschnittsansicht durch ein Ausführungsbeispiel eines erfindungsgemäßen Isolierkörpers 16 der Figur 1. Der Isolierkörper 16 weist im Inneren die hohlzylindrische Innenkontur 24 auf, an welcher mittig bezüglich der Längserstreckung des Isolierkörpers 16 das Zentriermittel 19 in Form von umfänglich angeordneten Noppen 25, 26, 27, 28, 29 und 30 angeordnet sind. Im Ausführungsbeispiel ist die Vielzahl der Noppen in einer 60 Grad Teilung durch sechs Noppen gebildet, andere Ausgestaltungen sind hier ebenfalls möglich.

Die leitende Beschichtung 20 und die äußere Leitschicht 23 sind dabei aus einem abriebfesten Leitlack gebildet, beispielsweise aus einem mit Russpartikeln versetzten Silikonlack, wodurch eine sichere Montage unter Aufrechterhaltung der Feldsteuereigenschaften der inneren und äußeren Leitschichten gewährleistet ist.

### Bezugszeichenlisten

- 1: Sammelschienenkupplung
- 2, 3: Schalterfelder
- 4, 4': Isolierbuchsen
- 5, 5': Kontaktstücke
- 6, 6': Verschraubung
- 7, 7': Innenkonusartiger Hohlraum
- 8, 8': Kugelenden
- 9, 9': Befestigungsflansch
- 10, 10': Eingegossenes Ende
- 11, 11': Steuerelektroden
- 12: Verbindungselement
- 13, 14: Ringfedern
- 15: Innere Hülse
- 16: Isolierkörper
- 17, 18: Außenkonusabschnitte
- 19: Zentriermittel
- 20: Leitende Beschichtung
- 21, 22: Stützhülsen
- 23: Äußere Leitschicht
- 24: Hohlzylindrische Innenkontur
- 25, 26, 27, 28, 29, 30: Noppen

## Patentansprüche

1. Isolierkörper (16) für eine Sammelschienenkupplung (1) zur Aufnahme von mittels eines Verbindungselementes (12) verbundenen Kontaktstücken (5, 5'), welche Schalterfeldern (2, 3) der Schaltanlage zugeordnet sind, welcher Isolierkörper (16) eine hohlzylindrische Innenkontur (24) mit einem Zentriermittel (19, 25, 26, 27, 28, 29, 3C) für das Verbindungselement (12) aufweist,
wobei der Isolierkörper (16) derart ausgestaltet ist, dass der Isolierkörper (16) das Verbindungselement (12) und die Kontaktstücke (5, 5') mit Abstand umgibt und
**dadurch gekennzeichnet, dass**
das Zentriermittel (19, 25, 26, 27, 28, 29, 30) durch mehrere an der Innenkontur verteilt angeordnete Noppen (25, 26, 27, 28, 29, 30) gebildet ist.

2. Isolierkörper nach Anspruch 1,
**dadurch gekennzeichnet, dass**
die hohlzylindrische Innenkontur (24) und die Noppen (25, 26, 27, 28, 29, 30) eine leitende Beschichtung (20) aufweisen.

3. Isolierkörper nach Anspruch 2,
**dadurch gekenntzeichnet, dass**
die leitende Beschichtung (20) aus einem abriebfesten Leitlack gebildet ist.

4. Isolierkörper nach einem der vorangehenden Ansprüche,
**dadurch gekennzeichnet, dass**
an dem Isolierkörper (16) eine äußere Leitschicht (23) vorgesehen ist.

5. Sammelschienenkupplung (1) für eine Schaltanlage zum Verbinden zweier Schalterfelder (2, 3) mit Isolierbuchsen (4, 4') für jedes Schalterfeld (2, 3), welche jeweils ein Kontaktstück (5, 5') umgeben und mit einem Verbindungselement (12) zum Verbinden der Kontaktstücke (5, 5') sowie einem Isolierelement, das eine hohlzylindrische Innenkontur (24) mit einem Zentriermittel (19, 25, 26, 27, 28, 29, 30) für das Verbindungselement (12) aufweist,
**dadurch gekennzeichnet, dass**
das Isolierelement als Isolierkörper (16) nach einem der Ansprüche 1 bis 4 ausgebildet ist.

## Claims

1. Insulating body (16) for a busbar coupling (1) for holding contact pieces (5, 5') which are connected by means of a connection element (12) and are associated with switch panels (2, 3) of the switchgear assembly, which insulating body (16) has a hollow-cylindrical internal contour (24) with a centering means (19, 25, 26, 27, 28, 29, 30) for the connection element (12), wherein the insulating body (16) is configured in such a way that the insulating body (16) surrounds the connection element (12) and the contact pieces (5, 5') at a distance, and **characterized in that** the centering means (19, 25, 26, 27, 28, 29, 30) is formed by a plurality of studs (25, 26, 27, 28, 29, 30), which are arranged distributed on the internal contour.

2. Insulating body according to Claim 1, **characterized in that** the hollow-cylindrical internal contour (24) and the studs (25, 26, 27, 28, 29, 30) have a conductive coating (20).

3. Insulating body according to Claim 2, **characterized in that** the conductive coating (20) is formed from a wearresistant conductive lacquer.

4. Insulating body according to one of the preceding claims, **characterized in that** an outer conductive layer (23) is provided on the insulating body (16).

5. Busbar coupling (1) for a switchgear assembly for connection of two switch panels (2, 3) with insulating bushes (4, 4') for each switch panel (2, 3), which each surround one contact piece (5, 5') and have a connection element (12) for connection of the contact pieces (5, 5') as well as an insulating element which has a hollow-cylindrical internal contour (24) with a centering means (19, 25, 26, 27, 28, 29, 30) for the connection element (12), **characterized in that** the insulating element is in the form of an insulating body (16) according to one of Claims 1 to 4.

## Revendications

1. Corps ( 16 ) isolant pour un couplage ( 1 ) de barres collectrices en vue de recevoir des pièces ( 5, 5' ) de contact, qui sont reliées au moyen d'un élément ( 12 ) de liaison et qui sont associées à des panneaux ( 2, 3 ) disjoncteurs de l'installation de distribution, lequel corps ( 16 ) isolant a un contour ( 24 ) intérieur en forme de cylindre creux ayant un moyen ( 19, 25, 26, 27, 28, 29, 30 ) de centrage de l'élément ( 12 ) de liaison,
dans lequel le corps ( 16 ) est conformé de manière à ce que le corps ( 16 ) isolant entoure à distance l'élément ( 12 ) de liaison et les pièces ( 5, 5' ) de contact et
**caractérisé en ce que**
le moyen ( 19, 25, 26, 27, 28, 29, 30 ) de centrage est formé par plusieurs boutons ( 25, 26, 27, 28, 29, 30 ) répartis sur le contour intérieur.

2. Corps ( 16 ) isolant suivant la revendication 1,
**caractérisé en ce que**
le contour ( 24 ) intérieur en forme de cylindre creux et les boutons ( 25, 26, 27, 28, 29, 30 ) ont un revêtement ( 20 ) conducteur.

3. Corps ( 16 ) isolant suivant la revendication 2
**caractérisé en ce que**
le revêtement ( 20 ) conducteur est un vernis conducteur résistant au frottement.

4. Corps ( 16 ) isolant suivant l'une des revendications précédentes
**caractérisé en ce que**
une couche ( 23 ) conductrice extérieure est prévue sur le corps ( 16 ) isolant.

5. Couplage ( 1 ) de barres conductrices pour une installation de distribution en vue de relier deux panneaux ( 2, 3 ) de disjoncteurs à des douilles ( 4, 4' ) isolantes pour chaque panneau ( 2, 3 ) disjoncteur, lesquelles entourent respectivement une pièce ( 5, 5' ) de contact, et comprenant un élément ( 12 ) de liaison des pièces ( 5, 5' ) de contact, ainsi qu'un élément isolant, qui a un contour ( 24 ) intérieur en forme de cylindre creux avec un moyen ( 19, 25, 26, 27, 28, 29, 30 ) de centrage de l'élément ( 12 ) de liaison,
**caractérisé en ce que**
l'élément isolant est sous la forme d'un corps ( 16 ) isolant suivant l'une des revendications 1 à 4.
